# EUROPEAN PATENT APPLICATION

(11) **EP 4 573 916 A1**
(43) Date of publication of application: **25.06.2025**
(21) Application number: 24218767.2
(22) Date of filing: 10.12.2024
(51) Int. Cl.: A23C 11/10, A23L 2/38, A23L 11/65, B01F 23/53, B01F 25/452, B01F 25/50, B01F 25/53, B01F 33/82, B01F 35/92

(54) **BATCH PRODUCTION OF GRAIN-BASED BEVERAGES**

(30) Priority: 18.12.2023 EP 23217488
(71) Applicant: Tetra Laval Holdings & Finance S.A., 1009 Pully (CH)
(72) Inventor: Hutmacher, Björn, 21509 Glinde (DE)
(74) Representative: Tetra Pak - Patent Attorneys SE

(57) **Abstract**

A method of manufacturing a grain-based beverage for human consumption enables batch production and may implemented in a system of low complexity. The method comprises introducing water, grain material and one or more enzymes into a mixing chamber (10A) of a mixing apparatus (10); operating a mixing device (12) of the mixing apparatus during a first time period to generate a batch of slurry in the mixing chamber; operating, during a second time period after the first time period, a circulation arrangement (13) to transfer the slurry on an external circulation path from the mixing chamber through a homogenization device (16) and back to the mixing chamber; introducing one or more further ingredients into the mixing chamber of the mixing apparatus; and operating the mixing apparatus and/or the circulation arrangement to produce the grain-based beverage based on the slurry and the one or more further ingredients.

## Description

### Technical Field

The present disclosure generally relates to manufacture of grain-based beverages, and in particular to batch production of grain-based beverages.

### Background Art

Plant-based beverages known as plant milk have become increasingly popular over the last years. Plant milk is vegan, healthy, and environmental-friendly. Production of plant milk comprises breaking starch, originating from plant material, into simple sugar molecules. The breaking of the starch is done by mixing the plant material with water and one or more enzymes. The production is conventionally made in a continuous process, in which plant material is mixed with water and transferred along a production line between various stations, for example a first station for mixing, a second station for enzymatic treatment, a third station for enzyme deactivation, a fourth station for fiber separation, and fifth station for final formulation, a sixth station for homogenization, a seventh station for heat treatment, and an eight station for packaging of the plant milk.

The production of plant milk is particularly challenging when starting from a grain material that has not been pre-processed into fine particles. For example, the grain material may include whole kernels, flakes, or coarsely ground flour (whole flour) of cereal grains. It is known that plant milk may give an unpleasant and "sandy" mouthfeel if it contains larger particles. The above-mentioned fiber separation is crucial to ensure a proper particle size in conventional production of grain-based beverages. In the fiber separation, a conventional decanter may be used to separate fibers and larger particles from an incoming mixture. The result is a liquid fraction, which may be used as a starting material for further formulation into a grain-based beverage. Conventional production of grain-based beverages produces huge amounts of solid by-product or residue through the fiber separation. The residue is normally discarded. It may alternatively be used as animal feed. Regardless, conventional production creates significant environmental waste and disposal costs for the industry.

The conventional production line as described above is adapted for continuous high-capacity production and involves a significant investment. There is a general need for more flexible production of grain-based beverages, for example in terms of capacity. For example, small scale producers generally have little need for the high-capacity production of existing production lines, and the high investment cost is often a limiting factor for these producers.

### Summary

It is an objective to at least partly overcome one or more limitations of the prior art.

One such objective is to provide a simple and cost-efficient technique for production of grain-based beverages.

Another objective is to provide a technique for production of grain-based beverages by use of a small number of system components.

One or more of these objectives, as well as further objectives that may appear from the description below, are at least partly achieved by a method of manufacturing a grain-based beverage for human consumption, and a system operable to manufacture a grain-based beverage according to the independent claims, embodiments thereof being defined by the dependent claims.

A first aspect of the invention is a method of manufacturing a grain-based beverage for human consumption. The method comprises: introducing water, grain material and one or more enzymes into a mixing chamber of a mixing apparatus; operating a mixing device of the mixing apparatus during a first time period to generate a batch of slurry in the mixing chamber; operating, during a second time period after the first time period, a circulation arrangement to transfer the slurry on an external circulation path from the mixing chamber through a homogenization device and back to the mixing chamber, wherein the homogenization device is operated to reduce a particle size of the slurry; introducing one or more further ingredients into the mixing chamber of the mixing apparatus; and operating the mixing apparatus and/or the circulation arrangement to produce the grain-based beverage based on the slurry and the one or more further ingredients.

The first aspect is based on the insight that there is a need for technique that enables batch-wise production of grain-based beverages. Such a technique is more readily adaptable to the needs of small-scale producers and may also be implemented to generate large production volumes. According to the first aspect, a batch of slurry is first prepared within the mixing apparatus, whereupon the slurry is circulated between the mixing apparatus and a homogenization device on an external circulation path, while the homogenization device operates to reduce the particle size of the slurry. This enables batch production at low complexity. By combining the mixing apparatus with the external homogenization device, the requirement on the mixing apparatus to reduce particle size is relaxed. The Applicant has found that the method of the first aspect may obviate the need to separate solid matter from the slurry during production of the grain-based beverage. This will significantly reduce complexity and cost.

By combining a mixing apparatus, including a mixing chamber and a mixing device, with a circulation arrangement, it is possible to perform a well-controlled addition of ingredients into the mixing chamber, since the operation of the circulation arrangement will distribute the resulting slurry throughout the system and allow the homogenization device to reduce the particle size of entire batch of slurry in the system. Likewise, the temperature of the slurry may be increased by well-controlled energy input in the mixing apparatus, for example by indirect or direct heating, since the energy input will be provided to the slurry throughout the system by the fluid circulation of the circulation arrangement. In other words, several process steps may be confined to the mixing apparatus. By using one and the same mixing apparatus for multiple purposes in the production of grain-based beverage, it is possible to reduce the number of system components considerably compared to a production line for continuous production.

A second aspect of the invention is a system operable to manufacture a grain-based beverage. The system comprises: a mixing apparatus comprising a mixing chamber, a mixing device in the mixing chamber, and one or more inlets and one or more outlets in fluid communication with the mixing chamber; a circulation arrangement comprising first piping connecting an outlet among the one or more outlets of the mixing apparatus to an inlet of a homogenization device and second piping connecting an outlet of the homogenization unit to an inlet among the one or more inlets of the mixing apparatus; and a control device configured to operate the mixing apparatus and the circulation arrangement in accordance with the method of the first aspect of any of its embodiments.

Still other objectives and aspects, as well as features, embodiments and technical advantages will appear from the following detailed description as well as from the drawings.

### Brief Description of the Drawings

FIG. 1 is a block diagram of an example system for producing grain-based beverage.
FIG. 2 is a flow chart an example method of producing grain-based beverage.
FIG. 3 is timing diagram of an implementation example of the method in FIG. 2.
FIG. 4 is a block diagram of a variant of the system in FIG. 1.
FIG. 5 is an exploded perspective view of an example homogenization device for use in the systems of FIGS 1 and 4.
FIG. 6 is a section view of an example mixing apparatus for use the systems of FIGS 1 and 4.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

Before describing embodiments in more detail, a few definitions will be given.

As used herein, "grain" or "grains" refer to cereal grains, including but not limited to oats, barley, rye, wheat, rice, spelt, teff, triticale, millet, maize, or sorghum.

As used herein, "grain material" is a raw material that is produced from cereal grains for use in production of grain-based beverage.

As used herein, "grain-based beverage" is a non-dairy beverage for human consumption that is produced from grains.

As used herein, "kernels" are hull-free kernels of cereal grains. The kernels are thus whole grains, in which bran, germ, and endosperm remains intact.

As used herein, "whole flour" is flour made from whole grains of cereal grains. In some embodiments, the whole flour has a particle size (D90, dry) in the range of 500-800 µm.

As used herein, "oat milk" refers to a non-dairy beverage made from oats, *Avena sativa.*

As used herein, "oat flakes" is a preparation of oats that have been de-husked, steamed, and flattened, or a coarse flour of hulled oat grains that have either been milled (ground), rolled, or steel-cut. Ground oats are also called white oats.

As used herein, "slurry" refers to a mixture of solids denser than water suspended in liquid.

As used herein, "total solids" or TS is used in its ordinary meaning and is a measure of all the suspended, colloidal, and dissolved solids in a sample. The total solids content of a sample is typically determined as the amount of solids remaining after heating the sample at 105°C to constant weight.

The term "D90" is used in its ordinary meaning and is a measure of particle size. The D90 value for a mixture designates that 90% of the particles in the mixture have a diameter or size of less than the D90 value. In some embodiments, the particle size is given by laser diffraction measurements.

As used herein, "liquefaction" refers to a process involving hydrolysis of a mixture that comprises starch originating from grain material, to lower the viscosity of the mixture. This thinning process may be assisted by addition of one or more enzymes, which break down longer starch chains into smaller ones. Any conventional liquefaction enzyme(s) may be used. Non-limiting examples of liquefaction enzymes include amylases (e.g., α-amylase), and pullulanase.

As used herein, "saccharification" refers to a process of converting starch into sugars and/or dextrin by use of one or more enzymes. In this context, "dextrin" refers to a group of low-molecular weight carbohydrates produced by hydrolysis of starch originating from grain material. Any conventional saccharification enzyme(s) may be used. Non-limiting examples of saccharification enzymes include β-amylase, β-glucanase, and glucoamylase.

As used herein, "vegetable oil" refers to an oil that is extracted from seeds or from fruits. Non-limiting examples of vegetable oils include sunflower oil, rapeseed oil, canola oil, corn oil, peanut oil, cottonseed oil, soybean oil, grape seed oil, olive oil, palm oil, and rice bran oil .

As used herein, "high-pressure homogenization" refers to a process in which a fluid is forced under high pressure through a narrow slot or gap, which causes a breakdown of the particles in the fluid due to cavitation, shearing, and collision. Conventionally, the pressure is in the range of 40-2000 bar. Correspondingly, a "high-pressure homogenizer" is a device configured to perform high-pressure homogenization. Such a device may comprise a mechanical structure that defines the gap, which may or may not be adjustable, and a pumping mechanism for generating the pressure to drive the fluid into the structure and through the gap.

As used herein, a "high-shear mixer" comprises a mixing unit, for example in form of a rotor, impeller, paddle, propeller, vane, turbine etc., such that the mixing unit has a peripheral speed of at least 10 m/s, at least 15 m/s, or at least 20 m/s. The mixing unit may in some implementations be surrounded by a stator for increasing the high-shear mixing effect. If present, the stator is arranged to create a close-clearance gap between itself and the rotor, to form a high-shear zone for the materials being processed as the materials exit the rotor. The rotor and stator combined together are often referred to as a mixing head, or generator. A high-shear mixer may comprise more than one generator.

The term "hydrodynamic cavitation" is used in its ordinary meaning and is a process of vaporization, bubble generation and bubble implosion that occurs in a flowing liquid as a result of a decrease and subsequent increase in local pressure.

The present disclosure relates to a novel technique of manufacturing a grain-based beverage by use of a system with a significantly reduced complexity compared to conventional production lines for continuous high-capacity production. In contrast to conventional production lines, the system is configured to produce the grain-based beverage in batches, with the size of the batch being given by the capacity of a mixing apparatus. In addition to the mixing apparatus, the system includes an external homogenization device, which is included in a circulation arrangement that is connected to transfer a mixture from the mixing apparatus through the homogenization device and back to the mixing apparatus. After significant experimentation, the Applicant has identified configurations and operating techniques of the system to produce, in a cost-effective way, a grain-based beverage that is not only acceptable for human consumption but also pleasant to the mouth.

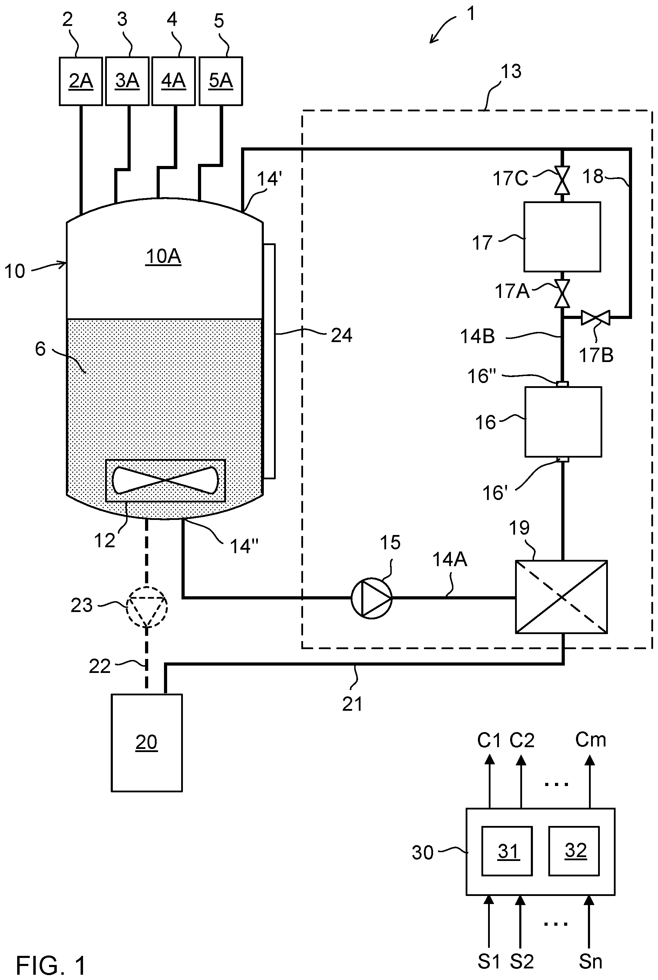

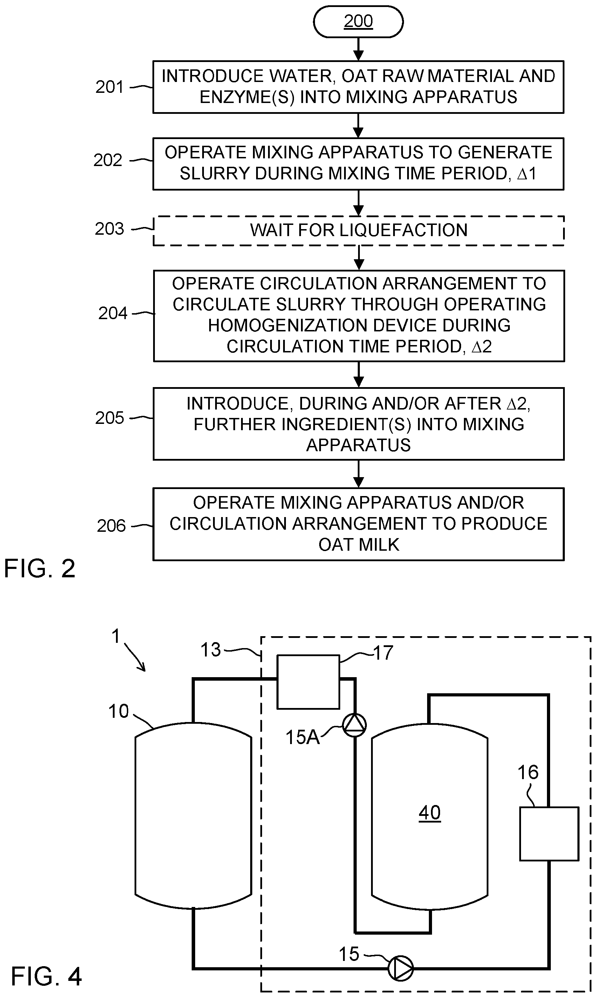

FIG. 1 is a block diagram of an example system 1 for manufacture of a grain-based beverage in accordance with some embodiments. The system comprises a mixing apparatus 10, which defines a mixing chamber 10A. The system further comprises sources 2-5 of various ingredients for use in producing the grain-based beverage. For example, source 2 may provide water 2A, source 3 may provide grain material 3A, source 4 may provide one or more enzymes 4A, and source 5 may provide vegetable oil 5A. It is realized that there may be sources of other ingredients as well, such as salt, flavoring, sweetener, vitamins, minerals, etc. In the illustrated example, the sources 2-5 are connected for fluid communication with a respective inlet in the top portion of the mixing apparatus 10. In an alternative, not shown, one or more for the sources 2-5 may be connected to a common inlet. It is also to be understood that further components may be installed to control or facilitate feeding of ingredients to the mixing apparatus 10, such as one or more valves, one or more pumps or feeders, etc. A mixing device 12 is operable to generate a mixture of ingredients within the mixing chamber 10A while reducing the size of particles in the mixture. As indicated, the mixing device 12 may comprise a rotor, blade or impeller. In some embodiments, the mixing device 12 is a high-shear mixer, for example as described below with reference to FIG. 4. As will be described further below, the mixing apparatus 10 is operable to generate a batch of slurry 6 in the mixing chamber 10A during an initial stage of a procedure for producing grain-based beverage.

The grain material 3A may include kernels, flakes, whole flour, or any combination thereof. Common to these grain materials is that they need significant processing for particle reduction to result in a grain-based beverage that is enjoyable to humans. Typically, to have a pleasant mouthfeel, the grain-based beverage needs to have a particle size, given as D90, of 200 µm or less, and preferably of 150 µm or less. Such particle sizes may be difficult to achieve by use of the mixing apparatus 10 alone, at least within reasonable production times and without dedicated filtration processing.

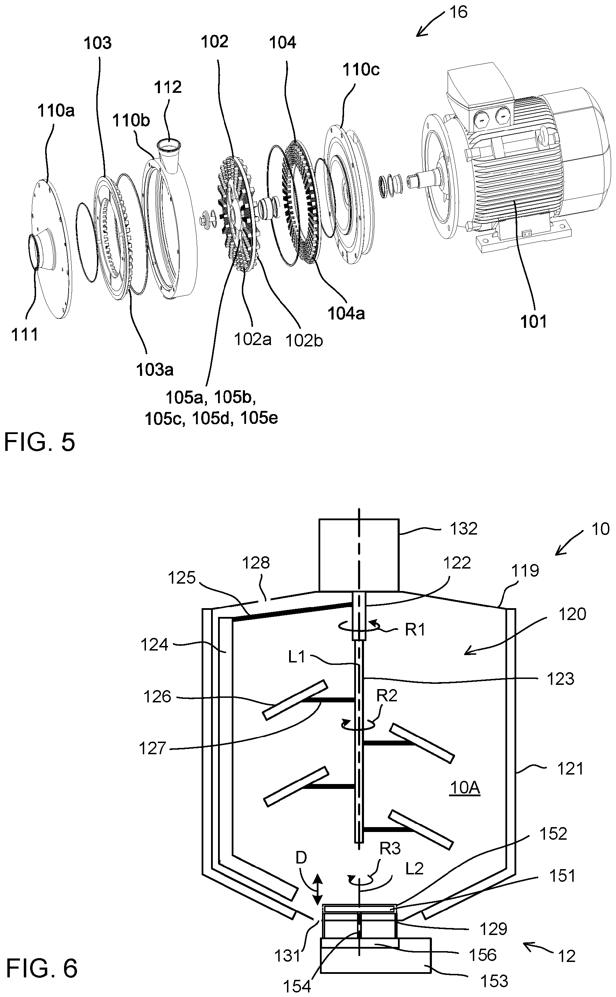

The system 1 further comprises a circulation arrangement 13, which defines an external fluid path for circulating fluid from the mixing chamber 10A through a homogenization device 16 and and back to the mixing chamber 10A. In the illustrated example, the circulation arrangement 13 comprises a first piping 14A extending from one or more outlets 14" (one shown) in the bottom of the mixing apparatus 10 to one or more inlets 16' (one shown) of the homogenization device 16. The homogenization device 16 is configured to process an incoming fluid from the mixing apparatus 10, for example the above-mentioned slurry 6, to reduce the particle size of incoming fluid. In some embodiments, the homogenization device 16 is a high-pressure homogenizer or a hydrodynamic cavitation device. In some embodiments, the homogenization device 16 is a mixer with a double-sided rotor, for example as described below with reference to FIG. 5. A second piping 14B extends from one or more outlets 16" (one shown) of the homogenization device 16 to one or more inlets 14' (one shown) in the top of the mixing apparatus 10. The second piping 14B thereby establishes a return flow path to the mixing chamber 10A. The second piping 14B need not be connected to a separate inlet 14', as shown, but may be share an inlet with one or more of the sources 2-5.

In the example of FIG. 1, the circulation arrangement 13 comprises a pumping device 15 for circulating fluid on the external fluid path. In the illustrated example, the pumping device 15 is arranged in the first piping 14A. The pumping device 15 may of any type capable of pumping a fluid that contains solid particles, for example a centrifugal pump, a positive displacement pump, or a vortex pump. In a variant, the pumping device 15 is implemented by a device that is operable to increase the pressure inside the mixing chamber 10A. In a further variant, the pumping device 15 is omitted and a corresponding pumping action is generated by the homogenization device 16. Depending on implementation, a further pumping device (not shown) may be arranged in the second piping 14B to transfer fluid from the homogenization device 16 to the mixing apparatus 10. In the example of FIG. 1, it is assumed that the pumping device 15 and/or the homogenization device 16 drives the fluid in the second piping 14B to the mixing apparatus 10.

In the example of FIG. 1, the circulation arrangement 13 comprises a cooling device 17, which is arranged in the second piping 14B and thus downstream of the homogenization device 16. The cooling device 17 may be any device capable of cooling a passing fluid, for example a plate heat exchanger, a shell-and-tube heat exchanger or a double-pipe heat exchanger.

In the example of FIG. 1, bypass piping 18 is connected to the second piping 14B, upstream and downstream of the cooling device 17, to enable fluid from the homogenization device 16 to bypass the cooling device 17. On/off valves 17A, 17B, 17C are arranged in the pipings 14B, 18 to define a valve arrangement that is operable to selectively direct fluid through the cooling device 17 or through the bypass piping 18.

In the example of FIG. 1, a switching unit 19 is arranged in the first piping 14A downstream of the pumping device 15. The switching unit 19 is operable to selectively divert the flow in the first piping 14A into a supply piping 21 that extends from the switching unit 19 to a storage or packaging station 20. The station 20 may comprise one or more storage tanks, one or more transportation vessels or shipment containers, or one or more filling machines for filling the grain-based beverage into consumer packages of any type, including but not limited to bottles of glass or plastic, or carton-based packages, which may be sealed for subsequent distribution. The tanks, vessels, containers or packages may or may not be configured for aseptic or semi-aseptic storage and/or distribution of the grain-based beverage.

In a variant, indicated by dashed lines in FIG.1, the system 1 comprises a supply piping 22, which extends from a further outlet in the bottom portion of the mixing apparatus 10 to the station 20. A pumping device 23 may be arranged in the supply piping 22. The supply piping 22 may be selectively opened to transfer the grain-based beverage from the mixing apparatus 10 to the station 20.

In the example of FIG.1, the mixing apparatus 10 includes a heating device 24, which is operable to heat the fluid in the mixing chamber 10A. The heating device 24 may be configured for direct heating, for example by injection of steam into the mixing chamber 10A. Alternatively or additionally, the heating device 24 may be configured for indirect heating. For example, the heating device 24 may comprise a jacket that surrounds the mixing chamber 10A (cf. 121 in FIG. 4) and be operable to circulate a heating medium through the jacket to heat the walls of the mixing chamber 10A. In another example, the heating device 24 comprises an electrical heater for heating the walls of the mixing chamber 10A.

The system 1 further comprises a control device 30. The control device 30 is configured to generate control signals C1, C2, ..., Cm. At least part of the control signals may be provided to control the operation of the mixing apparatus 10, for example the operation of the mixing device 12 and the heating device 24, so that the operation of the mixing apparatus 10 is at least partly automated. Further automation may be achieved by providing control signals to one or more devices (if present) that control the supply of ingredients from the sources 2-5. Control signals may also be provided to the circulation arrangement 13, for example to one or more of the pumping device 15, the switching unit 19, the homogenization device 16, the valve arrangement 17A-17C, or the cooling device 17. The control device 30 may also be configured to receive input signals S1, S2, ..., Sn, for example from one or more sensors (not shown) in the system. Such sensor(s) may measure temperature, pressure, flow rate, etc.

The control device 30 may be implemented by hardware components, or a combination of hardware components and software instructions. The software instructions may be executed by processing circuitry 31 in conjunction with computer memory 32 in the control device 30. The software instructions may be supplied to the control device 30 on a computer-readable medium, which may be a tangible (non-transitory) product (e.g. magnetic medium, optical disk, read-only memory, flash memory, etc.) or a propagating signal. For example, the control device 30 may be a generic or specialized computer device. In one embodiment, the control device 30 is a PLC.

Although not shown in FIG. 1, the control device 30 may further comprise an MMI (Man Machine Interface), which is configured so that the system may be controlled by an operator and so that information may be presented to the operator about the operation of the system. The MMI may, e.g., comprise one or more of a display, a touch screen, a mouse, a keyboard, a track pad, buttons, sliders, switches and knobs, allowing control data and/or instructions to be inputted by the operator.

It should be noted that the system in FIG. 1 is an implementation example. While some components may provide distinct advantages, as understood from the following description, they are optional. For example, this applies to the pumping device 15, the switching unit 19, the cooling device 17, the bypass piping 18 and the valve arrangement 17A-17C. The skilled person also realizes that the system 1 may include additional components, such as valves, sensors, etc.

In respect of the example in FIG. 1, it is to be noted that the system 1 lacks a dedicated separation unit or filtration unit, such as a decanter. A separation/filtration unit is normally required to produce a grain-based beverage with a sufficiently small particle size when the grain material 3A comprises large solid particles. For example, it is conventional practice to pass the slurry 6 through a decanter to remove insoluble solids that are larger than a predefined size, for example in the range of 50-200 µm. The provision of a decanter adds to the installation cost of the system. The running cost is also increased since the insoluble solids need to be handled for disposal. The Applicant has surprisingly found that it is possible to achieve an acceptable particle size of the grain-based beverage in the system of FIG. 1 without separation and removal of solid content from the slurry 6. In some embodiments, the acceptable particle size, given as D90, is less than 150 µm, 125 µm, or 100 µm.

In addition to reducing installation and running costs, the lack of separation processing will increase the utilization of the grain material, i.e. the production yield, since effectively all of the grain material ends up in the grain-based beverage. It is also likely to increase the nutritional value of the grain-based beverage since a larger portion of the nutritional components of the grain material is retained.

Some losses of grain material may nevertheless occur in the system 1, for example by solid material being stuck to the walls of the mixing chamber 10A and/or in the circulation arrangement 13 and being washed away during a cleaning step after production of a batch of grain-based beverage. However, in some embodiments, the system is operable to produce the grain-based beverage to include at least 90%, 95% or 98% by weight of the solid content of the grain material.

The operation of the system 1 in FIG. 1 will be further explained with reference to FIG. 2, which is a flow chart of an example method 200 of manufacturing a grain-based beverage. The method 200 will be described for production of oat-based beverage, "oat milk", based on an oat raw material. The oat raw material may include oat kernels, oat flakes, whole oat flour, or any combination thereof.

In step 201, water, oat raw material and one or more enzymes are introduced into the mixing chamber 10A of the mixing apparatus 10, for example from sources 2, 3 and 4 in FIG. 1. The ingredients may be introduced sequentially or in parallel, and in any order, depending on recipe. Step 201 may be performed manually by an operator or be at least partly automated by the control device 30.

In step 202, the mixing apparatus 10 is operated to generate a slurry (cf. 6 in FIG. 1) from the ingredients introduced in step 201. Thus, step 202 results in a batch of slurry in the mixing chamber 10A. Step 202 may involve operating the mixing device 12 to cut the oat raw material into smaller pieces. It is realized that the mixing device 12 may be configured to facilitate cutting, for example by provision of cutting elements, such as cutting edges on mixing blades. Step 202 may also involve heating and/or cooling the contents in the mixing chamber 10A. Step 202 may be at least partly performed during step 201. For example, the oat raw material and at least at least part of the water (and optionally at least part of the enzyme(s)) may be introduced into the mixing chamber 10A by step 201, before and/or while the mixing apparatus 10 is operated to perform step 202. Step 202 may be at least partly automated by the control device 30. Step 202 is performed for a first time period, Δ1 ("mixing time period"), which may be predefined. In some embodiments, the mixing time period is 1-15 minutes, for example 2-10 minutes.

The respective enzyme that is added in step 201 may be adapted to result in a liquefaction and/or saccharification of the mixture in the mixing chamber 10A. A liquefaction results in a reduced viscosity of the mixture and is beneficial for subsequent step 204. In some embodiments, the method includes a step 203 of waiting for a delay time period until the slurry in the mixing chamber 10A is sufficiently liquified. The mixing device 12 may or may not be operating during the delay time period. The delay time period may be predefined and given from a reference time point when all necessary ingredients for liquefaction are present in the mixing chamber 10A. Typically, the reference time point is when both oat raw material and a liquefaction enzyme have been added to the mixing chamber 10A. In some embodiments, the delay time period is 5-40 minutes, such as 10-30 minutes. In some embodiments, the delay time period is not predefined. Instead, the end of the delay time period is determined by taking samples of the slurry in the mixing chamber 10A and estimating and/or measuring the viscosity of the respective sample. When the viscosity is deemed adequate, the delay time period of step 203 maybe ended.

In step 204, after step 202 and step 203 (if present), the circulation arrangement 13 is operated to transfer the slurry on the external circulation path from the mixing chamber 10A through the homogenization device 16 and back to the mixing chamber 10A while the homogenization device 16 is operated to reduce the particle size of the slurry. Step 204 is performed for a second time period, Δ2 ("circulation time period").

In some embodiments, the circulation time period is set to so that the circulation arrangement 13 circulates the batch of slurry generated by step 202 in at least 4, 5 or 6 passes through the homogenization device 16 during the circulation time period. This has been found to facilitate attainment of an adequate particle size of the resulting oat milk.

In some embodiments, the circulation time period is set as a function of the amount of slurry that is generated in the mixing chamber 10A by step 202 and the flow rate of the slurry in the external circulation path of the circulation arrangement 13. For example, to achieve a given number of passes, N, the circulation time period may be given by: Δ2 = N*V/Φ, with V being the amount of slurry (given as volume or mass), and Φ being the flow rate (given by volume or mass). In a non-limiting example, V is in the range of 500-10,000 liters, and Φ is in the range of 1,000-20,000 liters per hour.

In some embodiments, the mixing device 12 of the mixing apparatus 10 is also operating during at least part of step 204 to process the slurry. Thereby, the slurry is concurrently processed by both the external homogenization device 16 and the mixing device 12. This has been found to facilitate attainment of an adequate particle size of the resulting oat milk.

In step 205, one or more further ingredients are introduced into the mixing chamber 10A of the mixing apparatus 10. The further ingredients may be additional ingredients to be added to the slurry in accordance with a recipe for forming the oat milk. Step 205 may be performed at any time during the method 200. Step 205 may be performed manually by an operator or be at least partly automated by the control device 30. In some embodiments, as indicated in FIG. 2, the further ingredients are introduced during and/or after the circulation time period, Δ2. In some embodiments, the circulation arrangement 13 is stopped during step 205. This may be done to protect an operator, if the operator needs to open the mixing apparatus 10 to manually add the one or more further ingredients. If the circulation arrangement 13 is operating when the mixing apparatus 10 is opened, the operator may be vulnerable to splashing slurry, especially if the slurry is returned to the mixing apparatus 10 at the top of the mixing chamber 10A, as shown in FIG. 1. The mixing device 12 may or may not be operating during step 205.

In step 206, which is performed after addition of the further ingredient(s), the mixing apparatus 10 and/or the circulation arrangement 13 is operated to produce the oat milk based on the slurry and the further ingredient(s) added in step 205.

In some embodiments, the further ingredients comprise one or more enzymes adapted to result in saccharification of the slurry. The one or more enzymes may be added from the source 4 in FIG. 1.

In some embodiments, the further ingredients comprise a vegetable oil. The vegetable oil may be added from the source 5 in FIG. 1. The addition of vegetable oil is typically part of the so-called final formulation of the oat milk and shapes the consistency of the oat milk, for example to achieve a desired mouthfeel and/or taste profile. The amount of vegetable oil depends on recipe, but may be in the range of 0.1% to 5% by volume of the oat milk. In the final formulation, other ingredients may be added as well, including but not limited to flavoring, sweetener, salt, thickener, stabilizer, vitamin, or mineral.

The incorporation of the vegetable oil into the slurry may be challenging since the vegetable oil has poor solubility in the water-based slurry. Therefore, step 206 operates the mixing apparatus 10 and/or the circulation arrangement 13 to disperse the vegetable oil evenly throughout the slurry. For example, the result of step 206 may be an emulsion that remains stable over a typical shelf life of the oat milk when packaged. The mixing device 10 may therefore be operated with high speed/shear, or even its highest speed/shear. Step 206 may benefit from implementing the mixing device 12 as a high-shear mixer. Step 206 may also benefit from concurrently operating the mixing apparatus 10 and the circulation arrangement 13 during at least part of step 206 to process the slurry and the further ingredient(s) by both the mixing device 12 and the homogenization device 16. Step 206 may be at least partly automated by the control device 30.

At completion of step 206, the system 1 contains oat milk. The system 1 may then be operated to transfer the oat milk in the mixing chamber 10A to the storage or packaging station 20. For example, the switching unit 19 may be set to fluidly connect the first piping 14A and the supply piping 21, and the pumping device 15 may be operated to pump the oat milk from the mixing chamber 10A via the switching unit 19 to the station 20. Alternatively, the pumping device 23 may be operated to pump the oat milk on the supply piping 22 to the station 20. It is understood that the circulation arrangement 13 and/or the mixing apparatus 10 may comprise a valve arrangement (not shown) that allows oat milk that is located in the circulation arrangement 13 at completion of step 206 to be transferred into the mixing chamber 10A, for example by operation of the pumping device 15, before or during transfer of oat milk from the mixing chamber 10A to the station 20.

When the oat milk has been transferred to the station 20, a cleaning operation may be performed to rinse the mixing chamber 10A and the circulation arrangement 13, for example to remove particles, foam, etc. The cleaning operation may comprise rinsing with water, possible heated, with or without a cleaning agent. Such cleaning is conventional and may be automated, which is also known as clean-in-place (CIP) in the art.

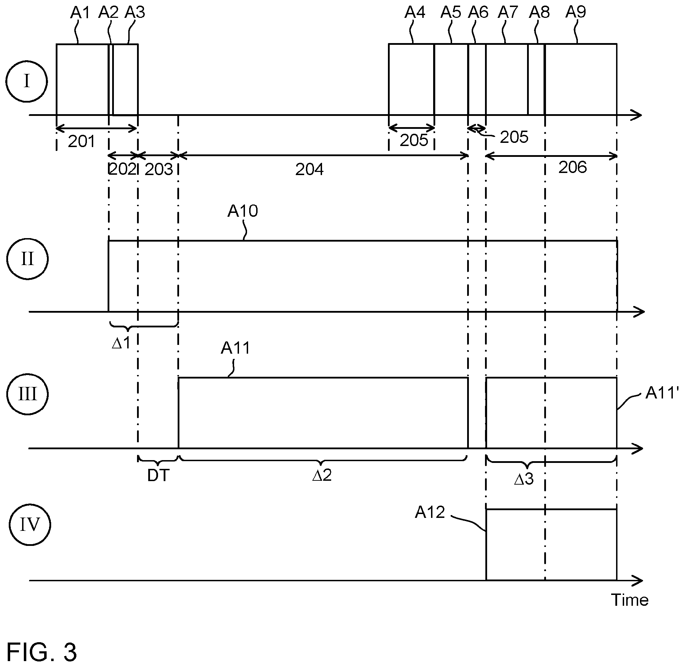

FIG. 3 is a sequence diagram of a detailed example of the method 200. The diagram in FIG. 3 illustrates, by timelines I-IV, the timing of actions that are performed in relation to the system in FIG. 1 for manufacture of oat milk. For clarity of presentation, actions performed by the mixing device 12 and the circulation arrangement 13 are presented on separate timelines II, III. Further, timeline IV shows when fluid is present in the cooling device 17. In action A1, water is admitted into the mixing chamber 10A. The water may be pre-heated to a (first) target temperature. Alternatively, the water may be heated in the mixing chamber 10A to the target temperature by operation of the heating device 24. If direct heating is used, the water added as steam will form part of the water in the mixing chamber 10A at completion of A1. In a non-limiting example, the target temperature is in the range of 60°C-80°C. The target temperature depends, for example, on the enzyme(s) to be added to the mixing chamber 10A. The heating device 24 may also be operated, preferably by indirect heating, to maintain the water at the target temperature during subsequent actions. In action A2, one or more enzymes are added to the mixing chamber 10A. A2 may be started when A1 is completed. Concurrently with the start of A2, the mixing device 12 is started, for example at maximum speed/shear. The operation of the mixing device 12 is represented by action A10 (timeline II). As seen, the mixing device 12 may be kept operating until the production of the oat milk is completed. It is to be understood that the speed/shear of the mixing device 12 may be varied over time. Action A2 is followed by action A3, in which oat raw material is added to the mixing chamber 10A. The addition of the oat raw material may cause the temperature of the mixture in the mixing chamber 10A to drop slightly from the target temperature. The heating device 24 may be operated to compensate for the temperature drop so as to re-heat the mixture to the target temperature. The water, enzyme(s) and oat raw material form a mixture in the mixing chamber 10A. Through the operation of the mixing device 12, this mixture is formed into a slurry. As indicated in FIG. 3, actions A1-A3 correspond to step 201 in the method 200 of FIG. 2, and step 202 is performed during actions A2 and A3 through the operation of the mixing device 12 (action A10).

When the oat raw material has been admitted into the mixing chamber 10A (action A3), the system is operated to wait for a delay time period DT before the circulation arrangement 13 is started to circulate fluid from the mixing apparatus 10 in the external fluid path, and the homogenization device 16 is operated to process the circulating fluid for reduction of particle size. This operation of the circulation arrangement 13 and its homogenization device 16 is represented by action A11 (timeline III). As indicated in FIG. 3, the delay time period DT corresponds to step 203 in the method 200. In the illustrated example, as seen from timeline II, the mixing device 12 is operating during step 203. Thereby, in this example, the mixing time period Δ1 extends from the start of A10 to the end of the delay time period DT.

Action A11 corresponds to step 204 in the method 200 and is performed during the circulation time period Δ2. In the illustrated example, as seen from timeline II, the mixing device 12 is operating during step 203, so that the mixture in in the system is processed for particle reduction by both the homogenization device 16 and the mixing device 12.

During A11, the heating device 24 may be operated to maintain the temperature of the mixture in the mixing chamber 10A at the target temperature.

In the illustrated example, action A4 is performed during the circulation time period Δ2. In action A4, one or more further enzymes are added to the mixture in the mixing chamber 10A. The further enzyme(s) may be adapted to achieve saccharification and/or further liquefaction of the mixture. By adding the further enzyme(s) while the circulation arrangement 13 is operating, it is ensured that the respective further enzyme is properly mixed with the slurry throughout the system. Action A4 is part of step 205 in the method 200.

In some embodiments, the heating device 24 may be operated to change the temperature of the mixture in the mixing chamber 10A to a new (second) target temperature, which is adapted to the further enzyme(s). The change of temperature may be performed before or during action A4. In a non-limiting example, the new working temperature may be in the range of 70°C-85°C. In action A4, after addition of the further enzyme(s), the slurry in the mixing chamber 10A may be held at the new target temperature for a predefined time, for example 20-30 minutes, or until a Brix measurement indicates that the sugar content of the slurry matches the recipe.

As seen from the timeline IV in FIG. 3, there is no fluid passing through the cooling device 17 during the circulation time period Δ2. This means that the valve arrangement 17A-17C is operated to direct the circulating slurry through the bypass piping 18 instead of through the cooling device 17. This is done to avoid that larger particles in the slurry get stuck inside the cooling device 17 and potentially reduce the efficiency of the cooling device 17 or even block fluid passage altogether.

In action A5, the slurry in the system is processed for enzyme deactivation. This may be achieved by operating the heating device 24 to increase the temperature of the slurry to a deactivation temperature, for example in the range of 90°C-110°C. In a non-limiting example, the slurry is heated to 99°C. Alternatively or additionally, the one or more enzymes may be deactivated in action A5 by changing pH and/or by adding regulatory molecules.

After the deactivation in A5, action A6 is performed to add one or more ingredients for use in the final formulation of the oat milk. Action A6 is part of step 205 in the method 200. As discussed above, the ingredients added for final formulation may include or vegetable oil, flavoring, sweetener, salt, thickener, stabilizer, vitamin, mineral, etc.

In the illustrated example, as seen in timeline III, the circulation of the slurry through the circulation arrangement 13 is stopped during A6. The operation of the homogenization device 16 may or may not be stopped. Stopping the circulation during A6 may be done to protect an operator from splashes if the mixing apparatus 10 needs to be opened during A6. If all ingredients can be added in A6 without opening the mixing apparatus 10, the circulation arrangement 13 and the homogenization device 16 may be kept operating during A6. In the illustrated example, as seen from timeline II, the mixing device 12 is operating during A6 to mix the ingredients added by A6 with the slurry in the mixing chamber 10A.

After action A6, the oat milk is gradually formed in the system 1 through the combined operation of the mixing device 12 (action A10, timeline II) and the circulation arrangement 13 (action A1 1', timeline III). The subsequent actions A7, A8 and A9 are performed as part of step 206 in the method 200 during a finalization time period Δ3. The homogenization device 16 may be operating during at least part of the finalization time period Δ3. In some embodiments, the homogenization device 16 is operating throughout the finalization time period. In actions A7 and A8, the heating device 26 is operated to perform a heat treatment of the fluid within the mixing chamber 10A, for the purpose of eliminating or at least reducing microorganisms in the fluid. In some embodiments, the heat treatment is performed for sterilization. In action A7, the fluid is heated to a predefined heat treatment temperature. In action A8, the fluid is held at the heat treatment temperature for a predefined minimum time ("holding time"). In a non-limiting example, the heat treatment temperature is in the range of 110°C-150°C. The heating may be performed for a holding time in the range of 4 seconds to 10 minutes, depending on temperature and pressure in the mixing chamber 10A. Action A7, and optionally action A8, may involve direct and/or indirect heating of the fluid in the mixing chamber 10A. During A7 and A8, the mixing chamber 10A may be hermetically sealed to boost the heat treatment by achieving the effect of a pressure cooker. By operating the circulation arrangement 13 during A7 and A8, it is ensured that all of the fluid in the system 1 is subjected to the heat treatment.

Actions A7 and A8 enable aseptic or semi-aseptic storage and/or packaging of the plant milk by the station 20 (FIG. 1). With reference to FIG. 1, it is realized that such aseptic storage/packaging may require the piping between the mixing apparatus 10 and the switching unit 19 to be disinfected. This is automatically achieved by keeping the circulation arrangement 13 operating during action A7 and A8, so that the piping is exposed to fluid at the heat treatment temperature. In the alternative of using the supply piping 22 for transferring the heat treated oat milk to the station 20, the supply piping 22 may be designated for use with heat treated oat milk and would require less frequent cleaning.

As an alternative or supplement to heat treatment, actions A7 and A8 may involve a non-thermal process for destruction of microorganisms, such as microfiltration, bactofugation and ultraviolet (UV) treatment, which are all techniques well-known to the person skilled in the art.

As seen from action A12 in timeline IV of FIG. 3, fluid is passing the cooling device 17 during the finalization time period Δ3. Thus, the valve arrangement 17A-17C is operated to direct the circulating fluid through the cooling device 17 instead of through the bypass piping 18. This can be done without compromising the cooling device 17 since the particle size of the circulating fluid is likely to be small enough to avoid clogging of the cooling device 17, for example below 200 µm, 150 µm or 100 µm, given as D90. During actions A7 and A8, the cooling device 17 is not operated to cool the passing fluid. However, during action A9, the cooling device 17 is operated to cool the passing fluid. Concurrently, if the heating device 24 is switchable into a cooling mode, the device 24 may be operated to cool the walls of the mixing chamber 10A to further speed up the cooling. For example, if the device 24 comprises a jacket that surrounds the mixing chamber 10A (cf. 121 in FIG. 4), a cooling medium may be circulated through the jacket to cool the walls of the mixing chamber 10A. During A9, the circulating fluid may be cooled to a final temperature, for example below 25°C. When A9 is completed, the system 1 contains heat treated oat milk at the final temperature.

The example in FIG. 3 embodies potentially desirable features of a method of manufacturing oat milk. Some of these features are discussed below.

The example shows that the method 200 may comprise an action of heating the slurry for enzyme deactivation. This provides for controlled enzymation of the slurry. The action of heating the slurry for enzyme deactivation may, but need not, be performed during step 204 of the method 200.

The example shows that the action of heating the slurry for enzyme deactivation may comprise operating a heating arrangement ("heating device") 24 of the mixing apparatus 10 to heat the slurry in the mixing chamber 10A. This provides for simple and well-controlled heating of the slurry.

The example shows that the action of heating the slurry for enzyme deactivation comprises operating the circulation arrangement 13 to circulate the slurry through the external circulation path. This avoids the need for additional heating of the slurry within the circulation arrangement 13.

The example shows that step 206 in the method 200 may comprise actions of concurrently operating the mixing apparatus 10 and the circulation arrangement 13 to process the slurry and one or more of the further ingredients by the mixing device 12 and by the homogenization device 16. This provides for efficient mixing of the slurry with the further ingredients into the oat milk, and also provides for continued reduction of particle size during step 206. The efficient mixing may reduce the total processing time.

The example shows that the method of manufacturing the oat milk may comprise an action of cooling the oat milk, and that the cooling may comprise an action of operating the circulation arrangement 13 to pass the oat milk through a cooling device 17 in the external circulation path. This provides for well-controlled cooling of the oat milk. The speed of cooling may be increased by concurrently cooling walls of the mixing chamber 10A.

The example shows that the oat milk, during the action of cooling, may be circulated on the external circulation path from the mixing chamber 10A through the cooling device 17 and back to the mixing chamber 10A. This ensures that all of the oat milk in the system 1 is subjected to cooling.

The example shows that the mixing device 12 and/or the homogenization device 16 is operated during at least part of the action of cooling, so as to process the oat milk. This may provide for improved stability of the oat milk and may also reduce the particle size of the oat milk for a given processing time.

The example shows that the circulation arrangement 13 may be operated to direct the slurry on an auxiliary flow path ("bypass piping") 18 to bypass the cooling device 17 during at least an initial portion of the second time period Δ2. This mitigates the risk of clogging the cooling device 17 and thereby improves the operability of the system 1.

The example shows that the action of cooling is preceded by an action of heating of the oat milk to a temperature suitable for sterilization. This provides for efficient sterilization of the oat milk.

The examples presented with reference to FIGS 1-3 also show that the slurry is transferred in the circulation arrangement 13 without intermediate storage of the slurry in the external circulation path. This means that the circulation arrangement 13 is operated to establish a continuous flow of fluid through the external circulation path. The absence of intermediate storage within the circulation arrangement 13 provides for a compact system and reduces the complexity to clean the system. Further, the installation cost of the system is reduced.

The examples show that the slurry may be transferred in the circulation arrangement 13 without further processing to reduce the particle size of the slurry, besides the processing performed by the homogenization device 16. Thus, in the circulation arrangement 13, only the homogenization device 16 is capable of reducing the particle size of the circulating fluid. This reduces the complexity of the system and provides for a compact system.

The examples show that the mixing chamber 10A is a single mixing chamber of the mixing apparatus 10. In other words, the mixing apparatus 10 only includes one mixing chamber 10A. This provides for a simple construction and operation of the mixing apparatus 10.

The examples show that the mixing device 12 is a single mixing device of the mixing apparatus 10. In other words, the mixing apparatus 10 only includes one mixing device 12. This provides for a simple construction and operation of the mixing apparatus 10.

FIG. 4 is a block diagram of a variant of the system 1 in FIG. 1. In this variant, the system 1 further comprises a buffer tank 40, which defines a storage chamber. Although not shown in FIG. 4, the system 1 may include any of the additional components shown in FIG. 1. The buffer tank 40 may include a mixing element (not shown) that is arranged for rotation inside the storage chamber. In the illustrated example, the tank 40 is installed in the external flow path downstream of the homogenization device 16 and upstream of the cooling device 17. Alternatively, the tank 40 may installed upstream of the homogenization 16 or downstream of the cooling device 17. An additional pumping device 15A is arranged downstream of the tank 40 to pump fluid from the tank 40 back to the mixing apparatus 10. One purpose of installing the tank 40 is to ensure that all of the fluid in the mixing apparatus 10 will be circulated through the homogenization device 16. Thus, the circulation arrangement 13 may be operated to first transfer all fluid from the mixing apparatus 10 to the tank, by the pumping device 15, and then transfer all of the fluid in the tank 40 to the mixing apparatus 10, by the pumping device 15A. This may repeated for any number of passes. In an alternative, the pumping device 15A is omitted and the tank 40 is arranged at a higher elevation than the mixing apparatus 10 so that the fluid is driven from the tank 40 by gravity.

In the system 1 of FIG. 4, steps 204 and 206 of the method 200 may comprise an action of transferring the slurry to the buffer tank 40, before or after transferring the slurry through the homogenization device 16.

FIG. 5 is a perspective view of an example homogenization device 16, which may be installed in the circulation arrangement 13. The device 16 is a mixer with a double-sided rotor and is known as such and disclosed in EP3421120A1, which is incorporated herein by reference. However, the device 16 has not been considered for installation in a circulation arrangement 13 in fluid communication with a mixing apparatus 10 as described herein. The device 16 has a motor 101 that is connected to a housing which comprises a front cover 110a, a main cover 110b and a back cover 110c. The covers 110a-110c are attached to each other by bolts to form the housing. Fluid enters the device 16 via an inlet 111 in the front cover 110a and leaves the device 16 via an outlet 112 in the main cover 110b.

Inside the housing, a first stator 103 and a second stator 104 are provided. The stators 103, 104 are fixedly arranged in the housing. The stators 103, 104 are provided with protrusions 103a, 104a, also known as teeth or blades, facing in directions towards each other. A rotor 102 is provided between the first and second stators 103, 104. The rotor is mechanically connected to the motor 1 and arranged to be driven to rotation inside the housing, between the stators 103, 104. The rotor 102 has protrusions 102a arranged to interact with the protrusions 103a of the first stator 103, and protrusions 102b arranged to interact with the protrusions 104a of the second stator 104. The interaction between the protrusions and how it is accomplished is per se known within the art. Basically, there are small gaps between the protrusions. When fluid is pumped through the apparatus, past these small gaps when the rotor rotates, then the fluid and any solid particle in the fluid are subjected to high shear. The rotor 112 is provided with openings 105a-105e, to provide for movement of the fluid through the rotor 112. Further details of the construction and operation of the device 16 in FIG. 5 is found in aforesaid EP3421120A1.

The device 16 in FIG. 5 is an example of a homogenization device 16 that, when operating, rotates a rotor 102 between first and second stators 103, 104 such that a first fluid path for an incoming fluid is formed between the rotor 102 and the first stator 103, and a second fluid path for the incoming fluid is formed between the rotor 102 and the second stator 104, and a fluid channel for the incoming fluid is formed through openings 105a-105e in the rotor 102. The fluid is subjected to shear forces in the first and second fluid paths.

Irrespective of configuration of the homogenization device 16, it may be desirable for the homogenization device to be a unitary device with a single electric motor for driving a rotatory element that interacts with incoming fluid to reduce the particle size of the incoming fluid. This provides for a simple and compact construction of the homogenization device 16, and a low power consumption in operation.

FIG. 6 is a side view, partly in section, of a high-shear mixing apparatus which may be installed as the mixing apparatus 10 in the system of FIG. 1 and operated in accordance with the method 200 in FIG. 2. The mixing apparatus 10 comprises a tank 119 that defines a mixing chamber 10A and has an inlet 128 for receiving various ingredients for production of oat milk, for example any of the ingredients described hereinabove. The mixing apparatus 10 has at its bottom 129 an outlet 131 through which a fluid may leave the tank 119. As understood from the foregoing, the fluid may be a slurry or oat milk depending on processing step. To facilitate introducing ingredients into the mixing apparatus 10, the mixing apparatus 10 may comprise a pressure arrangement (not shown) which is operable to create a pressure in the mixing chamber 10A below atmospheric pressure. To facilitate emptying of the tank 119, the pressure arrangement may be operated to create a pressure in the mixing chamber 10A above atmospheric pressure.

A jacket 121 surrounds a periphery of the tank 119 and has an inlet and an outlet (not shown) for allowing a heating or cooling medium (liquid or gaseous) to flow through the jacket 121 to thereby control the temperature of contents inside the tank 119. In some embodiments, the jacket 121 is a so-called dimple jacket.

A double shaft agitator 120 is located inside the mixing apparatus 10 and has a double shaft axle 122, 123 that is suspended from the top of the tank 119. The double shaft axle has a first axle 122 that encloses an upper part of a second axle 123, and the two axles 122, 123 are driven to rotate in same or different directions R1, R2 by a motor unit 132 that is arranged at the top of the mixer 10. The two axles 122, 123 extend along and are rotatable about a first rotational axis L1 of the mixing apparatus 10.

A first blade 124 is via an arm 125 connected to the first axle 122 so that the first blade 124 rotates in the same direction R1 as the first axle 122 when driven by the motor unit 132. The first blade 124 may be a scraper blade that rotates close to an inner wall of the tank 119, so that contents that stick to the inner tank wall may be scraped off.

A second blade 126 is via an arm 127 connected to the second axle 123 so that the second blade 126 rotates in the same direction R2 as the second axle 123 when driven by the motor unit 132. The second blade 126 may be a fluid lifting blade in the sense that it is arranged to make contents in contact with the second blade 126 flow upward from the bottom 129 of the tank 119, in a direction towards the top of the tank 119, when the second axle 123 is driven by the motor unit 132. Any suitable number of second blades 126 may be connected to the second axle 123, such as four blades, as shown in the illustrated example.

A rotor 151 is arranged at the bottom 129 of the tank 119. The rotor 151 is via an axle 154 connected to a rotor engine 153 that, when activated, drives the axle 154 to rotate the rotor 151 in a rotational direction R3. The axle 154 of the rotor 151 extends along and is rotatable about a second rotational axis L2 of the mixing apparatus 10. The two axes L1 and L2 are preferably aligned with each other. A stator 152 is arranged around the radial periphery of the rotor 151. An actuator 156 is arranged to move the stator 152 in a direction D that is parallel to the axis of rotation L2 of the rotor 151. The actuator 156 is operable to set the stator 152 in a lowermost position where it surrounds the radial periphery (circumference) of the rotor 151. The stator 152 may also be moved, by the actuator 156, into an uppermost position in which the stator 152 is lifted so as to not surround the radial periphery of the rotor 151. The stator 152 defines openings at the circumference of the rotor 151, thereby allowing contents to be pushed through the stator 152 when the stator 52 in a position where it surrounds all or part of the rotor 151.

The rotor 151, the stator 152 and the actuator 156 form a rotor-stator arrangement 150 that allows the shear, which is imparted on the contents by the combination of the rotor 151 and the stator 152, to be varied when the rotor 151 rotates. The arrangement 150 may correspond to the mixing device 12 in FIG. 1. In detail, when the stator 152 is in its lowermost position (closest to the bottom 129 of the tank 119), contents in the mixing chamber 10A are by the rotation of the rotor 151 drawn towards the upper side of the rotor 151. The contents are then forced outwards in a radial direction of the rotor 151, through the openings in the stator 152 that surround the circumference of the rotor 151.

When the stator 152 is in its uppermost position (farthest away from the bottom 129 of the tank 119), the contents in the tank 119 are by the rotation of the rotor 151 drawn towards the upper side of the rotor 151. The contents are still forced outwards in a radial direction of the rotor 151, but without passing through the openings in the stator 152 since the stator 152 does not surround the circumference of the rotor 151. The stator 152 can be positioned at any location between its lowermost position and its uppermost position, which will vary the amount of the contents that pass through the stator 152. The more contents that pass though the stator 152, the higher the shear will be. Thus, due to the actuator 156 and the movable stator 152, it is possible to vary the shear that is provided by the rotor 151 and the stator 152 during mixing of contents in the mixer 10.

The foregoing description has been given for oat milk since processing of oats into oat milk may be more challenging that many other types of grain material. The skilled person readily appreciates that the description is equally applicable to processing of other grain material into grain-based beverage. Details of the processing, such as selection of enzyme(s) and other ingredients, temperatures, processing times, etc., need to be adapted to the type of grain material and desired properties of the grain-based beverage and may be given by a specific recipe for the processing.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims. Further, while operations are depicted in the drawings in a particular order, this should not be understood as requiring that such operations be performed in the particular order shown or in sequential order, or that all illustrated operations be performed, to achieve desirable results.

Some modifications include, as may have been previously mentioned, the following alternatives and aspects:
The grain-based beverage may have a particle size, given as D90, of less than 150 µm, 125 µm, or 100 µm.

The one or more enzymes may comprise at least one liquefaction enzyme.

The further ingredients may comprise at least one saccharification enzyme.

The method may further comprise heating A7 the slurry for enzyme deactivation.

Said heating A7 the slurry for enzyme deactivation may comprise operating a heating arrangement 24 of the mixing apparatus 10 to heat the slurry in the mixing chamber 10A.

Said heating the slurry for enzyme deactivation may comprise operating the circulation arrangement 13 to circulate the slurry through the external circulation path 14A, 14B.

The said one or more of the further ingredients may comprise a vegetable oil.

The one or more further ingredients may be introduced into the mixing chamber 10A during and/or after the second time period.

The slurry may be transferred in the circulation arrangement 13 without intermediate storage of the slurry in the external circulation path 14A, 14B.

The slurry may be transferred in the circulation arrangement 13 without further processing to reduce the particle size of the slurry, besides processing performed by the homogenization device 16.

The homogenization device 16 may be a unitary device with a single electric motor 101 for driving a rotatory element 102 that interacts with the slurry to reduce the particle size of the slurry.

At least one of the mixing device 12 or the homogenization device 16 may be operated during at least part of said cooling A9 to process the grain-based beverage.

The circulation arrangement 13 may be operated to direct the slurry on an auxiliary flow path 18 to bypass the cooling device 17 during at least an initial portion of the second time period.

Said cooling A9 may be preceded by heating A7, A8 of the grain-based beverage to a temperature suitable for sterilization.

The mixing device 12 may comprise a high-shear mixer.

The grain material may comprise at least one of whole oat flour, oat flakes, or oat kernels.

## Claims

1. A method of manufacturing a grain-based beverage for human consumption, said method comprising:
introducing (201) water, grain material and one or more enzymes into a mixing chamber (10A) of a mixing apparatus (10),
operating (202) a mixing device (12) of the mixing apparatus (10) during a first time period to generate a batch of slurry in the mixing chamber (10A),
operating (204), during a second time period after the first time period, a circulation arrangement (13) to transfer the slurry on an external circulation path (14A, 14B) from the mixing chamber (10A) through a homogenization device (16) and back to the mixing chamber (10A), wherein the homogenization device (16) is operated to reduce a particle size of the slurry,
introducing (205) one or more further ingredients into the mixing chamber (10A) of the mixing apparatus (10), and
operating (206) the mixing apparatus (10) and/or the circulation arrangement (13) to produce the grain-based beverage based on the slurry and the one or more further ingredients.

2. The method of claim 2, wherein the circulation arrangement (13) is operated to circulate the slurry in at least 4, 5 or 6 passes through the homogenization device (16) during the second time period.

3. The method of claim 1 or 2, wherein the second time period is set as a function of a size of the batch of slurry in the mixing chamber (10A) and a flow rate of the slurry in the external circulation path (14A, 14B).

4. The method of any preceding claim, wherein said operating (204) during the second time period comprises: concurrently operating (A10, A11) the mixing apparatus (10) and the circulation arrangement (13) to process the slurry by the mixing device (12) and by the homogenization device (16).

5. The method of any preceding claim, wherein the grain-based beverage is manufactured to include at least 90%, 95% or 98% by weight of a solid content of the grain material.

6. The method of any preceding claim, wherein the grain-based beverage is manufactured without separation and removal of solid content from the slurry.

7. The method of any preceding claim, further comprising: waiting (203) for a delay time period after introduction of the grain material or the one or more enzymes, whichever is introduced last into the mixing chamber (10A), before operating the circulation arrangement (13) during the second time period.

8. The method of any preceding claim, wherein said operating (206) the mixing apparatus (10) and/or the circulation arrangement (13) to produce the grain-based beverage comprises: concurrently operating (A10, A11) the mixing apparatus (10) and the circulation arrangement (13) to process the slurry and one or more of the further ingredients by the mixing device (12) and by the homogenization device (16).

9. The method of any one of claims 1-16, wherein said operating (204) the circulation arrangement during the second time period comprises: transferring the slurry to a buffer tank (40), before or after transferring the slurry through the homogenization device (16).

10. The method of any preceding claim, wherein the mixing chamber (10A) is a single mixing chamber of the mixing apparatus (10), and the mixing device (12) is a single mixing device of the mixing apparatus (10).

11. The method of any preceding claim, further comprising: cooling (A9) the grain-based beverage, wherein said cooling (A9) the grain-based beverage comprises: operating the circulation arrangement to pass the grain-based beverage through a cooling device (17) in the external circulation path (14A, 14B).

12. The method of claim 10, wherein the grain-based beverage, during said cooling (A9), is circulated on the external circulation path (14A, 14B) from the mixing chamber (10A) through the cooling device (17) and back to the mixing chamber (10A).

13. The method of any preceding claim, wherein the homogenization device (16), when operating, rotates a rotor (102) between first and second stators (103, 104) such that a first fluid path for an incoming fluid is formed between the rotor (102) and the first stator (103), and a second fluid path for the incoming fluid is formed between the rotor (102) and the second stator (104), and a fluid channel for the incoming fluid is formed through openings (105a-105e) in the rotor (102).

14. The method of any preceding claim, wherein the homogenization device (16) comprises a high-pressure homogenizer, or a hydrodynamic cavitation device.

15. A system operable to manufacture a grain-based beverage, said system comprising:
a mixing apparatus (10) comprising a mixing chamber (10A), a mixing device (12) in the mixing chamber (10A), and one or more inlets and one or more outlets in fluid communication with the mixing chamber (10A);
a circulation arrangement (13) comprising first piping (14A) connecting an outlet (14") among the one or more outlets of the mixing apparatus (10) to an inlet (16') of a homogenization device (16) and second piping (14B) connecting an outlet (16") of the homogenization unit to an inlet (14') among the one or more inlets of the mixing apparatus (10); and
a control device (30) configured to operate the mixing apparatus (10) and the circulation arrangement (13) in accordance with the method of any one of claims 1-29.
